# EUROPÄISCHE PATENTSCHRIFT

(11) **EP 3 367 504 B1**
(45) Veröffentlichungstag und Bekanntmachung des Hinweises auf die Patenterteilung: **23.01.2019**
(21) Anmeldenummer: 17158117.6
(22) Anmeldetag: 27.02.2017
(51) Int. Cl.: H01Q 21/24, H01Q 9/42, H01Q 1/22

(54) **ANTENNE FÜR EINE RFID-LESEVORRICHTUNG UND VERFAHREN ZUM SENDEN UND/ODER EMPFANGEN VON RFID-SIGNALEN**
ANTENNA FOR AN RFID READING DEVICE AND METHOD FOR TRANSFERRING AND/OR RECEIVING RFID SIGNALS
ANTENNE POUR UN DISPOSITIF DE LECTURE RFID ET PROCÉDÉ D'ENVOI ET/OU DE RÉCEPTION DE SIGNAUX RFID

(43) Veröffentlichungstag der Anmeldung: 29.08.2018
(73) Patentinhaber: Sick AG, 79183 Waldkirch (DE)
(72) Erfinder: Pudenz, Florian, 22049 Hamburg (DE)

(56) Entgegenhaltungen:
- JP-A- 2015 097 339
- JP-A- 2016 025 480
- US-A- 5 835 063
- US-A1- 2014 242 903
- SOO-JI LEE ET AL: "Planar square quadrifilar spiral antenna for mobile RFID reader", RADAR CONFERENCE (EURAD), 2012 9TH EUROPEAN, IEEE, 31. Oktober 2012 (2012-10-31), Seiten 618-621, XP032326791, ISBN: 978-1-4673-2471-7

## Beschreibung

Die Erfindung betrifft eine Antenne für eine RFID-Lesevorrichtung und ein Verfahren zum Senden und/oder Empfangen von RFID-Signalen nach dem Anspruch 1 beziehungsweise 12.

RFID-Lesevorrichtungen dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Die erfassten Informationen werden verwendet, um die Weiterleitung und Sortierung von Gütern und Produkten zu steuern. Wichtige Anwendungen für die automatische Identifikation sind logistische Verteilerzentren, etwa von Paketversendern, oder die Gepäckaufgabe in Flughäfen.

Die RFID-Lesevorrichtung regt über ihre Antenne durch elektromagnetische Strahlung in ihrem Lesebereich befindliche RFID-Transponder zur Abstrahlung der gespeicherten Information an, empfängt die entsprechenden Transpondersignale und wertet sie aus. Dazu wird häufig der UHF-Frequenzbereich (Ultrahochfrequenz) verwendet, da es hier in dem Standard ISO 18000-6 einen etablierten Rahmen gibt und zudem Transponder in unterschiedlichen Entfernungen von einigen Millimetern bis hin zu mehreren Metern ausgelesen werden können. UHF-RFID-Transponder sind in sehr kompakten Bauformen verfügbar und können dementsprechend auch an sehr kleinen Objekten angebracht werden. RFID-Lesevorrichtungen im UHF-Bereich sind aber in den momentan verfügbaren Bauformen für viele Anwendungen aufgrund der Gehäusegröße nicht einsetzbar, beispielsweise in einer Fräsmaschine zur Erkennung der eingesetzten Fräswerkzeuge.

Es besteht deshalb ein Bedarf an besonders kompakten Bauformen der Antennen, die innerhalb der RFID-Lesevorrichtung möglichst wenig Bauraum beanspruchen. Generell hängt jedoch die benötigte Antennengröße von der Frequenz ab. Diese wiederum ist kein freier Parameter, da beispielsweise für UHF ein Frequenzbereich zwischen 850 MHz und 950 MHz vorgesehen ist, innerhalb dessen länderspezifisch bestimmte Frequenzen genutzt werden. Eine Antenne für eine RFID-Lesevorrichtung kann daher nicht ohne weiteres eine Grundfläche kleiner λ/4 x λ/4 annehmen, wobei λ die Wellenlänge des RFID-Signals ist.

Zwar ist in manchen Anwendungen denkbar, mit sehr kleinen externen Antennen zu arbeiten, aber dies bedeutet zusätzlichen Installationsaufwand. Außerdem sind bekannte Antennen für den RFID-Bereich, die überhaupt eine kleinere Gehäusegröße als λ/4 zulassen, linear polarisiert oder haben einen derart geringen Antennengewinn, dass Transponder nur in direktem Kontakt oder bestenfalls bis zu einem Abstand von einigen wenigen Zentimetern gelesen werden können. In RFID-Lesevorrichtungen werden aber vorzugsweise zirkular oder zumindest elliptisch polarisierte Antennen eingesetzt, um Transponder in allen Winkellagen mit Energie zu versorgen und auszulesen. Eine weitere Anforderung an die Antenne ist Robustheit gegenüber Störungen in der Umgebung, wie etwa Metallflächen neben oder hinter der RFID-Lesevorrichtung oder zusätzliche Dielektrika direkt vor der Antenne. Es gibt keine Antennen, welche diese Kriterien in sich vereinen.

Im Stand der Technik sind sogenannte Inverted-F-Antennen bekannt, die in vielen kompakten und mobilen Geräten verbaut werden. Den Namen tragen diese Antennen wegen ihrer F-Form. Die Querstriche sind aus der Einspeiseleitung und einer zusätzlichen seitlichen Kurzschlussverbindung zur Massefläche gebildet, der Hauptstrich ist der eigentliche Antennenarm. Eine häufige besonders flache und kompakte Bauform ist die sogenannte PIF-Antenne (PIFA, planar inverted-f antenna), die als Patchantenne in Mikrostreifentechnik direkt auf einer Leiterplatte integriert werden kann. Ein Nachteil dieser Antennen bei RFID-Anwendungen ist jedoch ihre lineare Polarisation.

Die US2009/0179816 A1 offenbart ein Antennensystem mit zwei PIFAs, die in einer Ebene und an ihren Fußpunkten zueinander zu einem rechten Winkel angeordnet sind. Eine der PIFAs wird mit einem Phasenversatz von 90° angesteuert, um insgesamt zirkular polarisierte Wellen zu erzeugen. Mit der gegenläufigen Ausrichtung, also der Tatsache, dass beide PIFAs von dem gemeinsamen Fußpunkt fortweisen, und der Verwendung von lediglich zwei PIFAs wird keine gute zirkulare Polarisation erreicht. Außerdem fehlen Maßnahmen, um die Abstrahlung der Antenne in eine bevorzugte Richtung zu lenken.

Die CN 203 895 604 U kombiniert für eine zirkular polarisierte Antenne insgesamt acht Inverted-F-Antennen in zwei Untergruppen zu je vier Antennen über ein Speisenetzwerk. Die Antenne ist recht baugroß, nicht allein wegen der acht Antennen, sondern weil die Antennenstruktur in sich nicht flach ist und sich das Speisenetzwerk auf einer anderen Ebene befindet als die Antennenstruktur. Ein derartiger dreidimensionaler Aufbau mit zusätzlichen Geometrie- und Leiterplattenebenen bedeutet außerdem gerade für eine Serienfertigung einen hohen Aufwand und damit zusätzliche Kosten.

Die CN 103 606 756 A zeigt eine weitere zirkular polarisierte Antenne aus vier Inverted-F-Antennen, die aber durch ihren Schichtaufbau und die in Schichtrichtung orientierten Antennen vergleichbare Nachteile hat.

In der US 2012/0299789 A1 werden vier Antennen mit jeweils einem L-förmigen Schlitz in einer Ebene angeordnet und mit einem Speisenetzwerk verschaltet, das sich nicht auf der gleichen Ebene befindet.

In der US2011/0018774 A1 werden unterschiedliche Bauformen vorgestellt, durch die mit mehreren Monopolantennen und entsprechendem Speisenetzwerk eine zirkulare Polarisation entsteht. Die Antennen verlaufen schräg über einer Massefläche. Ein Freiraum innen zwischen den Antennen kann von weiteren Elementen genutzt werden.

Aus der Arbeit von Soo-Ji Lee et al., "Planar square quadrifilar spiral antenna for mobile RFID reader", Microwave Conference (EuMC), 2012 42nd European. IEEE, 2012. S. 944-947 ist bekannt, vier jeweils senkrecht zueinander verkippte Inverted-F-Antennen mit Phasen von 0°, 90°, 180° und 270° anzusteuern, um so eine zirkulare Polarisation zu erzielen.

Die US 5 835 063 A offenbart eine Breitband-Monopolantenne, die als Erweiterung einer Inverted-F-Antenna angesehen wird. In einer Ausführungsform werden vier derartige Antennen an den Kanten eines Quadrats zueinander verkippt angeordnet und mit den unterschiedlichen Phasen für eine zirkulare Polarisation versorgt.

Die US 2014/0242903 A1 beschreibt eine Anordnung von zwei senkrecht zueinander angeordneten PIFA-Antennen. Eine Leiterplatte mit dieser Anordnung sitzt auf einer metallischen Gehäusefläche auf und steht dabei an den Rändern über.

Aus der JP 2016 025480 A ist eine Antennenvorrichtung bekannt, die eine quadratische Massefläche und zwei seitlich angeordnete, zueinander um 90° verkippte L-förmige Antennenelemente aufweist. Nach einer Ausführungsform sind in einer Umgebung der Antennenelemente Öffnungen angebracht, um dielektrische Verluste zu reduzieren.

Es ist daher Aufgabe der Erfindung, eine robuste und kompakte Antenne für eine RFID-Lesevorrichtung anzugeben.

Diese Aufgabe wird durch eine Antenne für eine RFID-Lesevorrichtung und ein Verfahren zum Senden und/oder Empfangen von RFID-Signalen nach Anspruch 1 beziehungsweise 12 gelöst. Die Antenne basiert auf Einzelantennen des einleitend beschriebenen Typs Inverted-F-Antenne, die so mit gegenseitigem Phasenversatz gespeist werden, dass eine zirkulare Polarisation entsteht. Damit soll auch eine elliptische Polarisation mit ausreichend kleinem Achsenverhältnis umfasst sein. Die Einzelantennen sind in einer Ebene angeordnet. Das betrifft zum einen die Anordnung der Einzelantennen zueinander, die in einer gemeinsamen Ebene liegen. Es betrifft aber auch die Elemente der Einzelantennen, die ebenfalls in derselben Ebene bleiben. Bildlich gesprochen liegt also die jeweilige F-Form in der Ebene, statt wie häufig im Stand der Technik auf den Enden der Querstriche zu stehen. Innerhalb der Ebene sind die Einzelantennen zueinander verkippt, um aus der Überlagerung der jeweiligen linearen Polarisation die zirkulare Polarisation zu erzeugen.

Die Erfindung geht nun von dem Grundgedanken aus, mindestens vier Einzelantennen vorzusehen und diese in einer Drehrichtung auszurichten. Prinzipiell lässt sich auch mit zwei Einzelantennen eine dann aber nur unzureichende zirkulare Polarisation erreichen. Umgekehrt sind auch sechs, acht oder noch mehr Einzelantennen mit entsprechender Ansteuerung denkbar, wobei jedoch der Aufwand den Zusatznutzen meist nicht rechtfertigt. Die Ausrichtung in Drehrichtung bedeutet, dass die Einzelantennen ohne Spiegelung ineinander überführt werden könnten, und führt ebenfalls zu einem besseren zirkular polarisierten Signal. Eine gemeinsame Massefläche (ground plane) parallel zu der Ebene der Einzelantennen erzeugt eine Vorzugsrichtung des abgestrahlten Signals.

Die Erfindung hat den Vorteil, dass eine besonders kompakte und zugleich gut zirkular polarisierte Antenne mit hohem Antennengewinn und geringem Achsenverhältnis aufgebaut werden kann. Dabei sind auch Grundflächen von weniger als λ/4 x λ/4 denkbar. Die Antenne beansprucht wenig Bauraum und ermöglicht zudem, den Bauraum besser auszunutzen, indem Komponenten beispielsweise einer RFID-Lesevorrichtung gemeinsam mit den Einzelantennen besonders kompakt untergebracht werden. Durch Anordnung in einer Ebene reduziert sich die Anzahl der Komponenten, insbesondere wenn die Einzelantennen auf einer Leiterplatte integriert werden. Die Antenne kann optimal auf ein gewünschtes Frequenzband ausgelegt werden, ohne unnötig Reserven für ein breitbandigeres Design zu opfern

Die Einzelantennen sind bevorzugt F-förmig, wobei der senkrechte Hauptstrich eine Monopolantenne bildet, jedoch mit einem zusätzlichen Kurzschluss als oberen Querstrich neben einem Einspeisepunkt an dem unteren Querstrich. Das entspricht dem einleitend schon erläuterten Grundaufbau einer inverted-F-Antenne.

Die Einzelantennen sind vorzugsweise PIFA-Antennen (Planar Inverted-F Antenna). Somit werden die Strukturen der Einzelantennen durch Mikrostreifen auf einer Leiterplatte gebildet (Patchantenne). Die konkrete Form solcher PIFA-Antennen kann auf der Oberfläche der Leiterplatte, aber sogar auch unter Einbeziehung der Platinenstruktur in Schichten, Tiefenrichtung oder auf der Rückseite sehr variabel gestaltet werden. Beispielsweise kann sich die Kurzschlussleitung auf der Rückseite der Leiterplatte hinter dem Einspeisepunkt befinden, um den Flächenbedarf zu verringern. Allgemein ergeben sich viele Freiheitsgrade für das Design der Einzelantennen und die Gestaltung der Antenne als Ganzes sowie eines Gehäuses oder sonstiger Komponenten, in das die Antenne eingebunden werden soll.

Die Antenne weist bevorzugt vier Einzelantennen in quadratischer Anordnung auf. Die Einzelantennen sind um 90° gegeneinander verkippt und bilden so ein Quadrat. Dabei entspricht vorzugsweise eine Einzelantenne einer Seite des Quadrats, aber das muss nicht so sein. Leichte Abweichungen von einer Verkippung um 90° sind denkbar, sofern die Auswirkungen auf die zirkulare Polarisation in Kauf genommen werden. Die vier Einzelantennen umschließen eine Massefläche im Inneren, wobei dieser Bereich insbesondere noch für zusätzliche Schaltungsstrukturen genutzt wird.

Die Einzelantennen erstrecken sich vorzugsweise jeweils über eine Ecke der quadratischen Anordnung hinaus. Anders ausgedrückt bilden die Einzelantennen selbst die jeweilige Ecke und einen Teil der angrenzenden Kanten des Quadrats. In dieser Ausführungsform ist demnach die direkte Zuordnung einer Seite des Quadrats zu einer Einzelantenne aufgebrochen. Dadurch entsteht ein zusätzlicher Designfreiheitsgrad.

Die Einzelantennen weisen bevorzugt einen verbreiterten Endbereich auf. Dieser Endbereich liegt nochmals bevorzugt am Fußpunkt des Hauptstrichs der F-Form. Eine derartige Verbreiterung ermöglicht eine weitere Verkürzung der Einzelantennen und damit insgesamt einen noch kompakteren Antennenaufbau.

Mindestens eine Einzelantenne weist bevorzugt eine Anpassung insbesondere in einem verbreiterten Endbereich auf. Dabei handelt es sich beispielsweise um eine Abschrägung. Durch individuelle Abweichungen der Einzelantennen voneinander können Einflüsse kompensiert werden, die nicht in gleicher Weise auf alle Einzelantennen wirken, beispielsweise Anschlüsse oder unterschiedliche Gehäuseformen in der Umgebung einer Einzelantenne.

Die Speiseschaltung ist bevorzugt dafür ausgebildet, vier Einzelantennen mit einem Phasenversatz von +90° in Richtung zu einem Fußpunkt eines senkrechten Hauptstrichs der F-förmigen Einzelantennen anzusteuern. Es ist klar, dass bei vier Einzelantennen ein jeweiliger Phasenversatz mit dem Betrag 90° erforderlich ist, um eine zirkulare Polarisation zu erreichen. Das lässt aber immer noch eine Vorzeichenwahl beziehungsweise eine Wahl mit oder gegen den Uhrzeigersinn bezüglich der in Drehrichtung ausgerichteten Einzelantennen. Entgegen dem ersten Anschein ist diese Wahl nicht beliebig, sondern hat große Auswirkungen auf das Achsenverhältnis. Die spezielle Wahl +90° in Richtung zum Fußpunkt des Hauptstrichs der F-Form führt daher zu wesentlich besseren Antenneneigenschaften, als dies umgekehrt bei -90° der Fall wäre.

Die Speiseschaltung ist bevorzugt in der Ebene zwischen den Einzelantennen angeordnet. Damit wird ein für die zirkulare Polarisation der Antenne erforderliches Element besonders kompakt einbezogen. Die Gesamtstruktur aus Einzelantennen und Speiseschaltung bildet weiterhin eine einzige Ebene. Es können alternativ oder zusätzlich andere Bauelemente zwischen den Einzelantennen untergebracht werden.

Die Einzelantennen sind bevorzugt auf einer Leiterplatte in der Ebene angeordnet. Damit entsteht eine integrierte, flache Antennenstruktur. Die Leiterplatte kann weitere Schaltungen aufweisen, etwa wie im Vorabsatz erläutert eine Speiseschaltung in der Mitte. Auch die Rückseite der Leiterplatte kann für weitere Bauelemente beziehungsweise eine entsprechende Bestückung genutzt werden.

Vorzugsweise sind zumindest in einer Umgebung der Einzelantennen Öffnungen in der Leiterplatte vorgesehen. Dazu können beispielsweise entsprechende Ausfräsungen vorgesehen sein. Es verbleiben genug Stege oder sonstige Bereiche des Leiterplattenmaterials, um die mechanische Stabilität zu erhalten. Die dielektrischen Eigenschaften der Leiterplatte weisen Toleranzen auf, insbesondere bei Änderungen der Umgebungsbedingungen. Durch die Öffnungen, d.h. ein gezieltes Entfernen von Material an Stellen, die für die Funktion der Antenne nicht notwendig sind, reduziert sich der Einfluss von Materialtoleranzen. Es werden deshalb konstantere und für die Einzelantenne besser übereinstimmende Umgebungsbedingungen und damit stabilere Antenneneigenschaften geschaffen. Die Öffnungen können für weitere Baulemente genutzt werden, beispielsweise für Kunststoffelemente zur Erhöhung der mechanischen Stabilität eines Gehäuses oder einer Haube, oder als optischer Strahlengang für Bauteile auf einer zweiten Leiterplatte parallel zu der Leiterplatte.

Die Massefläche ist bevorzugt von einer Wand eines leitenden Gehäusebauteils gebildet, auf dem die Leiterplatte mit Überstand aufsitzt, wobei die Einzelantennen zumindest teilweise auf dem Überstand angeordnet sind. Das Gehäusebauteil ist beispielsweise quaderförmig und aus Metall. Durch das Gehäusebauteil wird ausreichend Abstand zwischen den Einzelantennen und weiteren Elementen eines Geräts geschaffen, welches die Antennen nutzt, beispielsweise eines RFID-Lesegeräts. Der Überstand verhindert, dass die Einzelantennen in unerwünschter Weise mit dem Gehäusebauteil in Kontakt kommen, wobei an dem Kurzschluss und der Einspeisung der jeweiligen Inverted-F-Antennen ein solcher Kontakt bevorzugt hergestellt sein soll. Das Innere des Gehäusebauteils kann als Bauraum verwendet werden, der sogar noch gegen elektromagnetische Strahlung insbesondere der Antenne abgeschirmt ist, insbesondere für die Speiseschaltung oder Sende-Empfangsschaltungen des RFID-Lesegeräts.

Das Gehäusebauteil weist bevorzugt Abschrägungen auf und sich so mit zunehmendem Abstand von der Leiterplatte in den Bereich unterhalb Überstands hinein erstreckt. Ein solches Gehäusebauteil hat insbesondere die Form eines Pyramidenstumpfes. Aufgrund der Abschrägungen hat das Gehäusebauteil praktisch genauso wenig Auswirkung auf die Einzelantennen wie ein quaderförmiges Gehäusebauteil. Es stellt jedoch zusätzlichen Bauraum im Inneren zur Verfügung, der sonst ungenutzt bliebe.

In bevorzugter Weiterbildung weist eine RFID-Lesevorrichtung eine erfindungsgemäße Antenne auf. Die Antenne ist dabei zum Senden von RFID-Signalen an einen RFID-Transponder und/oder zum Empfangen von RFID-Signalen von einem RFID-Transponder vorgesehen, und die RFID-Lesevorrichtung weist bevorzugt weiterhin eine Auswertungseinheit zum Eincodieren einer RFID-Information in die RFID-Signale und/oder zum Auslesen einer RFID-Information aus den RFID-Signalen auf. Die Antenne ermöglicht eine besonders kompakte Bauform der RFID-Lesevorrichtung, während sie weiterhin das benötigte Frequenzband beispielsweise im UHF-Bereich abdeckt. Eine solche RFID-Lesevorrichtung wird bevorzugt in stationärer Montage an einem Lesebereich eines Förderers oder eines Leseportals zum Auslesen mindestens eines auf dem Förderer oder durch das Leseportal bewegten RFID-Transponders eingesetzt. Wegen der erfindungsgemäßen Antenne kann eine solche RFID-Lesevorrichtung kostensparend aus besonders wenig Einzelkomponenten in weniger Arbeitsschritten montiert werden. Um nur einige diesbezügliche Aspekte erneut aufzuführen, kann die Anzahl der Baugruppen durch die Integration von Antennenelementen auf einer Leiterplatte, zusätzliche Integration der Speiseschaltung sowie weiteren Bauraum auf der Rückseite der Leiterplatte, in der Gerätemitte oder in einem Gehäusebauteil mit der Massefläche reduziert werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung des Aufbaus einer Inverted-F-Antenne;
- Fig. 2: ein Blockschaltbild einer zirkular polarisierten Antenne aus vier Einzelantennen und einem Speisenetzwerk zu deren Ansteuerung mit passendem Phasenversatz;
- Fig. 3: eine dreidimensionale Ansicht einer zirkular polarisierten Antenne aus vier Inverted-F-Antennen in einer Ebene;
- Fig. 4: eine Seitenansicht der Antenne gemäß Figur 3;
- Fig. 5: Draufsichten auf eine zirkular polarisierte Antenne aus vier Inverted-F-Antennen zur Veranschaulichung einer vorteilhaften Phasenansteuerung bei Drehrichtung mit dem Uhrzeigersinn und gegen den Uhrzeigersinn;
- Fig. 6: eine Draufsicht auf eine weitere Ausführungsform einer Antenne mit zusätzlichen Ausfräsungen;
- Fig. 7: eine dreidimensionale Ansicht einer weiteren Ausführungsform einer Antenne mit einem Gehäusebauteil in Form eines Pyramidenstumpfes;
- Fig. 8: eine dreidimensionale Ansicht einer weiteren Ausführungsform einer Antenne mit verbreiterten Endbereichen der einzelnen Inverted-F-Antennen;
- Fig. 9: eine dreidimensionale Ansicht einer weiteren Ausführungsform einer Antenne, wobei die einzelnen Inverted-F-Antennen sich um eine Ecke herum erstrecken;
- Fig. 10: eine dreidimensionale Ansicht einer weiteren Ausführungsform einer Antenne, in der in den Eckbereichen eine Aussparung für weitere Bauelemente vorgesehen sind; und
- Fig. 11: ein Blockschaltbild einer verallgemeinerten zirkular polarisierten Antenne aus n Einzelantennen mit entsprechendem n-fachen Leistungsteiler zu deren phasenrichtiger Ansteuerung.

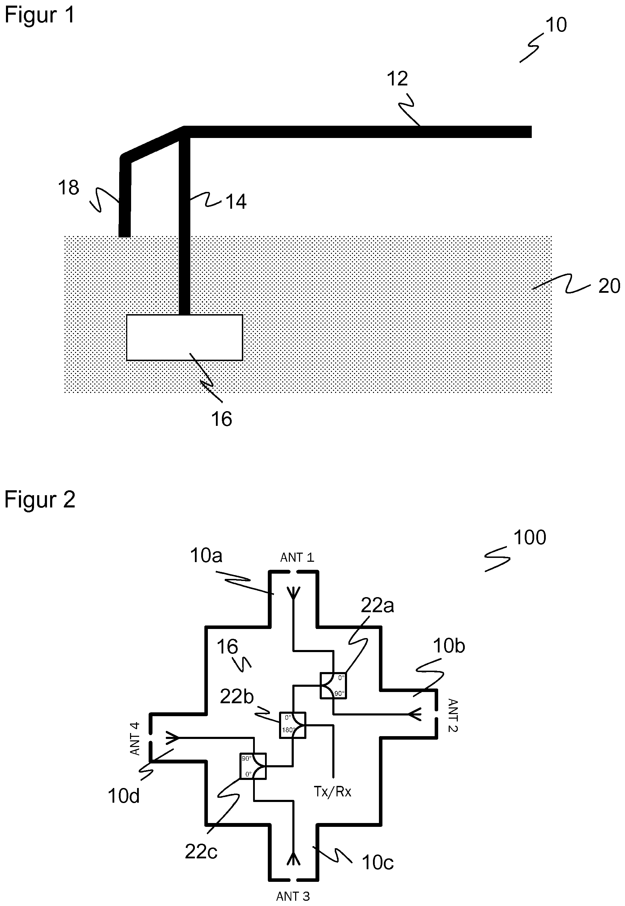

Figur 1 zeigt schematisch den Aufbau einer Einzelantenne 10, die als Inverted-F-Antenne ausgebildet ist. Die namensgebende F-Form würde in diesem Fall nach Spiegelung und Drehung um 90° noch deutlicher erkennbar. Ein dem Hauptstrich der F-Form entsprechender Arm 12 der Einzelantenne 10 wird über eine Speiseleitung 14, die den rechten Querstrich der F-Form bildet, von einer nur angedeuteten Speiseschaltung 16 gespeist. In Abwandlung einer Monopolantenne ist neben der Speiseleitung 14 ein zusätzlicher Kurzschluss 18 vorgesehen, der den linken Querstrich der F-Form bildet. So kann die Länge der Monopolantenne, bezogen auf eine Auslegung für die gleiche Frequenz, deutlich reduziert werden. Die baulichen Vorteile überwiegen in den hier vorgesehenen Anwendungen den etwas geringeren Wirkungsgrad und folglich Antennengewinn.

Befindet sich die Antennenstruktur der Einzelantenne 10 wie dargestellt in einer Ebene mit der zugehörigen Massefläche 20, so wird auch der Begriff Planar Inverted-F-Antenne (PIFA) verwendet. Inverted-F-Antennen einschließlich PIFA sind nur linear polarisiert.

Durch eine Kombination von mehreren PIFA Antennen (bei Ansteuerung mit gleicher Leistung und entsprechendem Phasenversatz von 90°) kann aber ein zirkular polarisiertes Feld erzeugt werden.

Figur 2 zeigt ein Blockschaltbild einer zirkular polarisierten Antenne 100 aus vier Einzelantennen 10a-b. Obwohl die Einzelantennen 10 hier nur symbolisch gezeigt sind, handelt es sich um Inverted-F-Antennen wie zu Figur 1 vorgestellt. Eine jeweilige Einzelantenne 10a-d allein eignet sich wegen ihrer linearen Polarisation nur sehr bedingt für den Einsatz in einer RFID-Lesevorrichtung. Dieser Nachteil wird durch die Kombination mehrerer Einzelantennen 10a-d aufgehoben, wodurch eine gewünschte Polarisation, insbesondere zirkulare einschließlich einer annähernd zirkularen elliptischen Polarisation erreichbar wird.

Die vier Einzelantennen 10a-d sind um jeweils 90° gegeneinander verkippt. Sie werden mithilfe der Speiseschaltung 16 mit gleich großem Eingangssignal und 90° Phasenversatz betrieben, um die zirkulare Polarisation zu erzeugen. Die Speiseschaltung 16 ist hier beispielhaft ein Speisenetzwerk mit drei 90°-Leistungsteilern 22a-c.

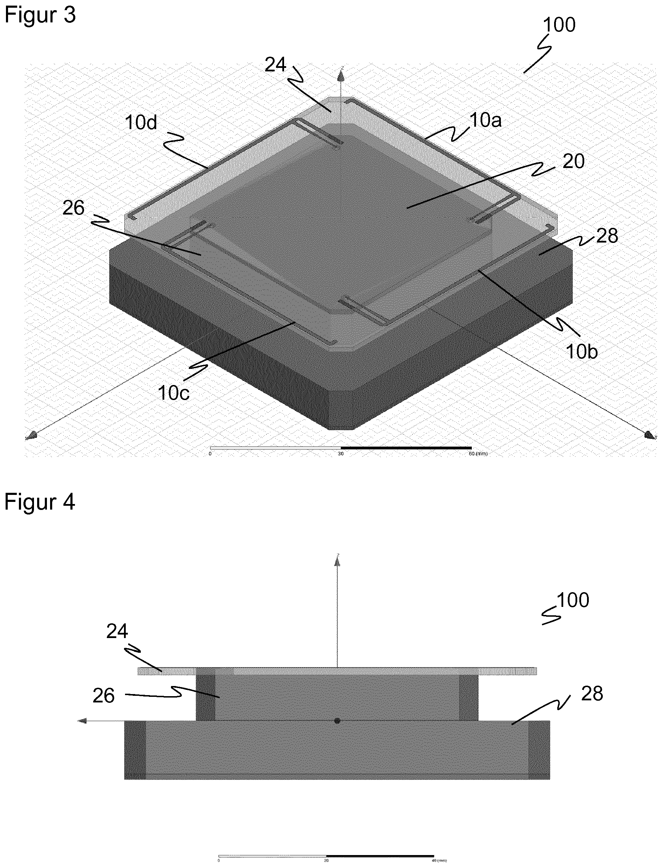

Figur 3 zeigt in einer dreidimensionalen Darstellung eine Ausführungsform einer Antenne 100 aus Einzelantennen 10a-d, die jeweils als vier Inverted-F-Antennen ausgebildet sind und die in einer Ebene liegen. Damit ist nicht nur gemeint, dass die Einzelantennen 10a-d eine Ebene bilden, sondern auch die Einzelantennen 10a-d für sich liegen in der Ebene. Das ist in Figur 3 deutlich zu erkennen, wo die Querstriche der jeweiligen F-Form in derselben Ebene bleiben. Figur 4 ist eine entsprechende Seitenansicht der Antenne 100, in der dementsprechend kein Antennenelement aus der Ebene der Einzelantennen 10a-d herausragt.

Die Ebene ist in dieser Ausführungsform auch durch eine Leiterplatte 24 bestimmt, auf welcher die Einzelantennen 10a-d insbesondere in Form von Mikrostreifen untergebracht sind (PIFA, Patchantenne). Auf dieser Leiterplatte 24 kann beispielsweise auch die Massefläche 20, mit welcher der Kurzschluss 18 verbindet, oder die hier nicht dargestellte Speiseschaltung 16 integriert werden. Es entsteht demnach durch die Verlagerung der Antennenelemente in eine Leiterplattenebene die Möglichkeit, den inneren Bereich zur Bestückung zu nutzen. Das kann auch die Rückseite der Leiterplatte und nicht direkt zu der Antenne gehörende Schaltungselemente etwa für den Sende-/ Empfangsteil einer RFID-Lesevorrichtung betreffen.

In der dargestellten Ausführungsform sitzt die Leiterplatte 24 auf einem leitenden, insbesondere metallischen Gehäuseteil 26. Das Gehäuseteil 26 ist hier quaderförmig, wobei diese Gestalt später auch variiert wird. Im Bereich der Einzelantennen 10a-d steht die Leiterplatte 24 über, damit es nicht zu unerwünschter Nähe oder gar einem Kurzschluss kommt. Der Innenraum des Gehäuseteils 26 kann beispielsweise zur Erfüllung von EMV-Anforderungen als abgeschirmter Bauraum verwendet werden.

Eine gemeinsame Massefläche 28 (ground plane) unter beziehungsweise hinter der Anordnung der Einzelantennen 10a-d dient dazu, eine Richtwirkung zu erzeugen, um möglichst viel der abgestrahlten Energie nach vorne beispielsweise in Leserichtung zu lenken. Die gemeinsame Massefläche 28 kann wiederum als Gehäuseteil insbesondere aus leitendem oder metallischem Material ausgestaltet sein, um dort weitere Bauteile wie eine zusätzliche Leiterkarte unterzubringen.

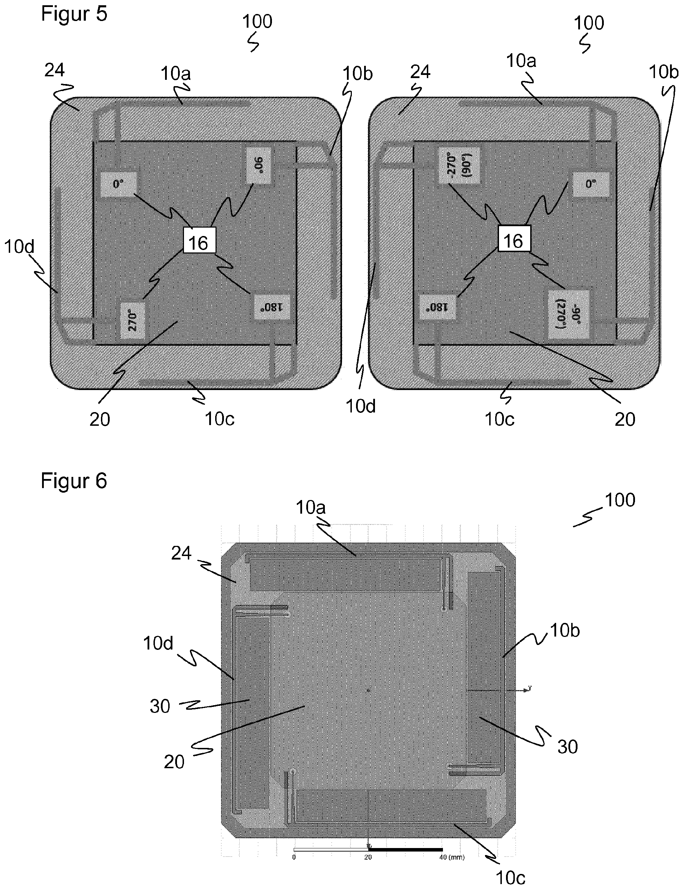

Figur 5 zeigt zwei Draufsichten auf jeweils eine zirkular polarisierte Antenne 100 aus vier Einzelantennen 10a-b, die als Inverted-F-Antennen ausgebildet sind. Die Ansichten im linken und rechten Teil der Figur 5 unterscheiden sich durch die Drehrichtung der Einzelantennen 10a-d und die Phasenansteuerung. Wie schon in Figur 3 sind die F-Formen jeweils in einer gemeinsamen Drehrichtung ausgerichtet. Das bedeutet, dass Einzelantennen 10a-d durch Verkippen und Verschieben ineinander überführt werden können, ohne sie zu spiegeln. Anders ausgedrückt kann die Antenne 100 jedenfalls hinsichtlich der F-Formen um jeweils 90° gedreht und dadurch in sich selbst überführt werden. Nochmals anders ausgedrückt ist jeweils der Fußpunkt des Hauptstrichs der F-Form einer Einzelantenne 10a-d an dem Kopf der F-Form der benachbarten Einzelantenne 10a-d angeordnet.

Es gibt nun zwei Möglichkeiten der Ausrichtung in einer gemeinsamen Drehrichtung, nämlich im Uhrzeigersinn und gegen den Uhrzeigersinn, und diese beiden Möglichkeiten sind im linken und rechten Teil der Figur 5 gezeigt. Wie durch die Erfindung festgestellt wurde, ist für ein möglichst geringes Achsenverhältnis die Drehrichtung von entscheidender Bedeutung. Je nach Ausrichtung der Einzelantennen 10a-d muss dafür die Phasenlage der Einspeisesignale angepasst sein. Ein gutes, also geringes Achsenverhältnis ergibt sich, wenn der Phasenversatz +90°, also mit positivem Vorzeichen, für die jeweilige Einzelantenne 10a-d vorgegeben wird, die in der durch den Fußpunkt der F-Form vorgegebene Drehrichtung liegt. Der dafür erforderliche Phasenversatz in beiden Drehrichtungen ist in Figur 5 eingezeichnet.

Wird die Drehrichtung vertauscht und das Vorzeichen des Phasenversatzes nicht wie soeben erläutert beachtet, dann steigt das Achsenverhältnis deutlich an, und das Maximum des Antennengewinns verschiebt sich auf die Rückseite der Antenne 100. Diese nachteiligen Effekte zeigen sich sogar schon für eine ideale Antenne 100 auf einer symmetrischen und kompakten Massefläche, so dass unter realen Bedingungen beispielsweise in einem durch Design und Toleranzen ungleichmäßig einwirkenden Gehäuse mit Anschlussleitungen zusätzliche Verschlechterungen zu erwarten sind.

Figur 6 zeigt eine Draufsicht auf eine weitere Ausführungsform einer Antenne 100. Im Unterschied zu den bisherigen Ausführungsformen sind hier in der Umgebung der Einzelantennen 10a-d Öffnungen 30 in der Leiterplatte 24 vorgesehen. Diese Öffnungen 30 entstehen beispielsweise durch Ausfräsen und dienen dazu, die Abhängigkeit der Antenneneigenschaften von Umgebungsbedingungen und Materialtoleranzen zu reduzieren.

Die Materialien in der Umgebung der Einzelantennen 10a-d beeinflussen die Funktion der Antenne 100, speziell deren Resonanzfrequenz. Maßgeblich ist in diesem Zusammenhang die Dielektrizitätskonstante oder das effektive εᵣ, das sich aus den εᵣ-Kennwerten aller nichtleitenden Materialien in der Umgebung der Einzelantennen 10a-d zusammensetzt. Je näher die einzelnen Materialien sich dabei an einer Einzelantenne 10a-d befinden und je größer ihre räumliche Ausdehnung ist, desto größer ist ihr Einfluss.

Die hier in Betracht zu ziehenden Materialien sind in erster Linie diejenigen eines möglichen Gehäuses und das Substratmaterial der Leiterplatte 24. Ein Gehäuse besteht üblicherweise aus einem homogenen Kunststoffmaterial mit genau bestimmbarer, nur wenig schwankender Dielektrizitätskonstante, die sich aufgrund der vergleichsweise großen Abstände zu den Einzelantennen 10a-d kaum auswirken. Das Substratmaterial der Leiterplatte 24 dagegen befindet sich in unmittelbarer Nähe zu den Einzelantennen 10a-d und hat deshalb deutlich größeren Einfluss. Zwar ist es denkbar, Hochfrequenz-Substratmaterialien mit sehr geringen Toleranzwerten zu verwenden, aber dies bedeutet erheblich höhere Kosten als ein Standardmaterial wie FR4.

Daher ist es vorteilhaft, durch die Öffnungen 30 das Volumen des Substratmaterials in der Nähe der Einzelantennen 10a-d zu reduzieren. Dann befindet sich dort Luft mit bekannter Dielektrizitätskonstante, die auch nur geringen Schwankungen beispielsweise durch Luftfeuchtigkeit unterliegt. Die Einzelantennen 10a-d belegen nur einen geringen Anteil der Leiterplatte 24, so dass die nicht genutzten Bereiche als Öffnungen 30 beispielsweise ausgefräst werden können. Zur Erhöhung der Stabilität wären auch einzelne schmale Stege innerhalb der Öffnungen 30 denkbar, ein Großteil des Materials kann aber ohne Einfluss auf die Antenneneigenschaften entfernt werden. Auf diese Weise entstehen Antennen 100 mit deutlich geringeren Toleranzen insbesondere in der Serienproduktion. Die Öffnungen 30 können zusätzlich genutzt werden, etwa um ein Sichtfeld für einen zusätzlichen optischen Sensor oder eine LED auf einer unterhalb angeordneten weiteren Leiterplatte zu schaffen. Denkbar ist auch das Durchführen mechanischer Verstärkungen oder Abstützungen beispielsweise eines oberen Gehäuseteils auf einem unteren Gehäuseteil.

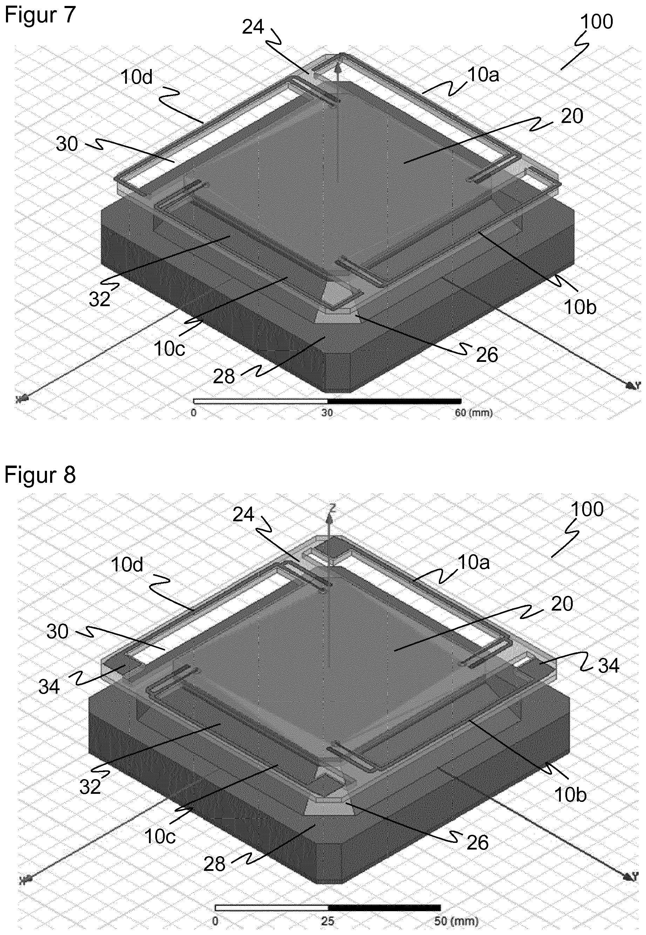

Figur 7 zeigt eine dreidimensionale Ansicht einer weiteren Ausführungsform einer Antenne 100. In dieser und nachfolgenden Ansichten sind erneut die Öffnungen 30 zu erkennen, die aber nicht zwingend vorhanden sein müssen. Der durch Figur 7 zu illustrierende Unterschied betrifft das Gehäuseteil 26. In bisherigen Ausführungsformen war hier eine Quaderform vorgesehen. Nun gemäß Figur 7 werden die seitlichen Flächen 32 des Gehäuseteils 26 abgeschrägt. Daraus ergibt sich in diesem Ausführungsbeispiel die Form eines Pyramidenstumpfes. Abweichende Schrägen an den seitlichen Flächen 32 sind aber möglich. Figur 7 zeigt auch in den Eckbereichen eine zusätzliche Abkantung, die genaugenommen nicht mehr einem Pyramidenstumpf entspricht.

Das Gehäuseteil 26 nimmt durch die abgeschrägte Form einen Teil des zuvor freien Raums unter den Einzelantennen 10a-d ein. Dadurch wird zusätzlicher Bauraum in Inneren des Gehäuseteils 26 gewonnen. Durch die Abschrägung bleibt der Abstand zu den Einzelantennen 10a-d gewahrt, so dass sich der Einfluss der Gehäuseteils 26 nach Figur 7 kaum von demjenigen einer Quaderform unterscheidet.

Figur 8 zeigt eine dreidimensionale Ansicht einer weiteren Ausführungsform einer Antenne 100. In dieser Ausführungsform sind die Endbereiche 34 der Einzelantennen 10a-d verbreitert, insbesondere diejenigen am Fuß des Hauptstrichs der F-Form. Dadurch kann bei gleicher Resonanzfrequenz die Gesamtlänge der Einzelantennen 10a-d verringert werden.

Ohne Darstellung in Figur 8 ist weiterhin möglich, Einzelantennen 10a-d individuell durch Veränderung der Form anzupassen. Dafür eignet sich der verbreiterte Endbereich 34 besonders, der beispielsweise eine Abschrägung erhalten kann, bei der praktisch eine Eckregion des Endbereichs 34 abgeschnitten wird. Solche individuellen Formanpassungen dienen dazu, die Resonanzfrequenz anzupassen, um Einflüsse der Umgebung auszugleichen, die nur bestimmte Einzelantennen 10a-d oder verschiedene Einzelantennen 10a-d in unterschiedlichem Maße betreffen. Ein Beispiel sind Anschlussleitungen oder Buchsen für Energieversorgung und Kommunikation, die als zusätzliche metallische Elemente Einfluss auf die Einzelantennen 10a-d ausüben und die in der Regel nur von einer Seite zugeführt sind.

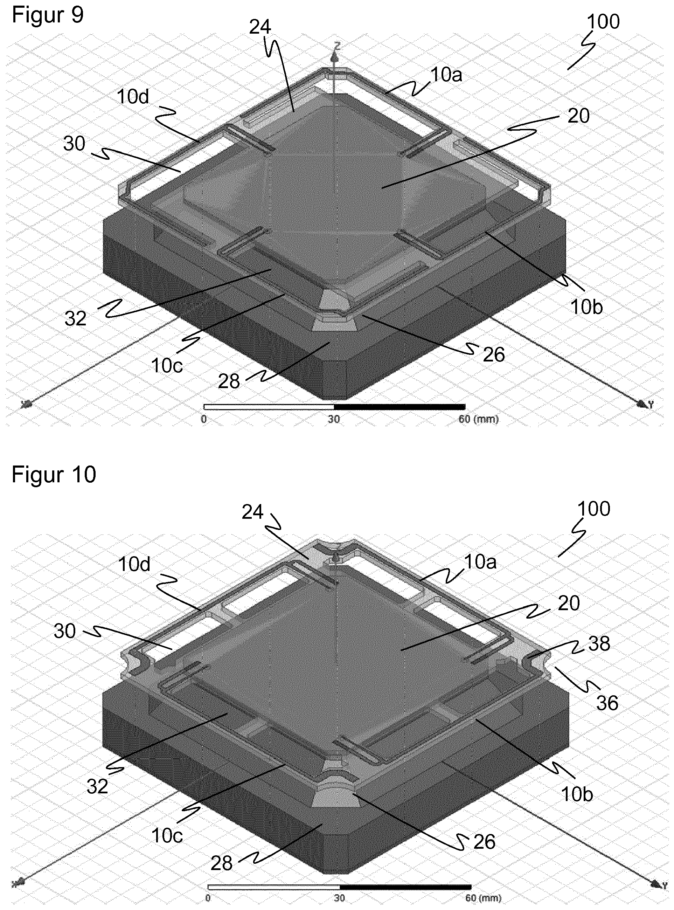

Figur 9 zeigt eine dreidimensionale Ansicht einer weiteren Ausführungsform einer Antenne 100. In dieser Ausführungsform sind die Einzelantennen 10a-d nicht gerade und als Seiten eines Quadrates angeordnet, sondern bilden mit einer abgewinkelten Form dessen Ecken. Dadurch verändert sich auch die Geometrie des Gehäuseteils 26 und der Massefläche 20, was zugleich als weiteres Beispiel zur möglichen Formgestaltung des Gehäuseteils 26 verstanden werden kann. Die Speisung der Einzelantennen 10a-d erfolgt entsprechend der gewinkelten Anordnung in der Mitte einer Seite und nicht mehr in der Nähe der Ecke der quadratförmigen Gesamtanordnung.

Figur 10 zeigt eine dreidimensionale Ansicht einer weiteren Ausführungsform einer Antenne 100. In dieser Ausführungsform sind die Einzelantennen 10a-d wieder als Seiten eines Quadrats angeordnet. Um einen freien Eckbereich 36 zu schaffen, an dem beispielsweise Lichtwellenleiter oder mechanische Stützelemente angeordnet werden können, sind die Endbereiche 38 der Einzelantennen 10a-d mit einer abgerundeten Ecke nach innen geführt.

Die Figuren 5 bis 10 sind jeweils genutzt worden, um die Variation eines bestimmten Merkmals zu erläutern. Dargestellt sind aber meist mehrere dieser Variationen zugleich. Das darf nicht einschränkend verstanden werden, denn auch andere Kombinationen sind möglich. Eine spezielle Phasenansteuerung in Abhängigkeit von der Drehrichtung nach Figur 5, das Anbringen von Öffnungen 30 zur Reduzierung der Abhängigkeit der Antenneneigenschaften von Materialtoleranzen nach Figur 6, ein Gehäuseteil 26 mit abgeschrägten seitlichen Flächen 32 nach Figur 7, Einzelantennen 10a-d mit verbreitertem Endbereich nach Figur 8 oder individuelle Anpassungen der Einzelantennen 10a-d, um die Ecke geführte Einzelantennen 10a-d nach Figur 9 und nach innen gerundete, dadurch freibleibende Eckbereiche der Antenne 100 nach Figur 10 sind jeweils Merkmale, die praktisch beliebig miteinander kombiniert werden können.

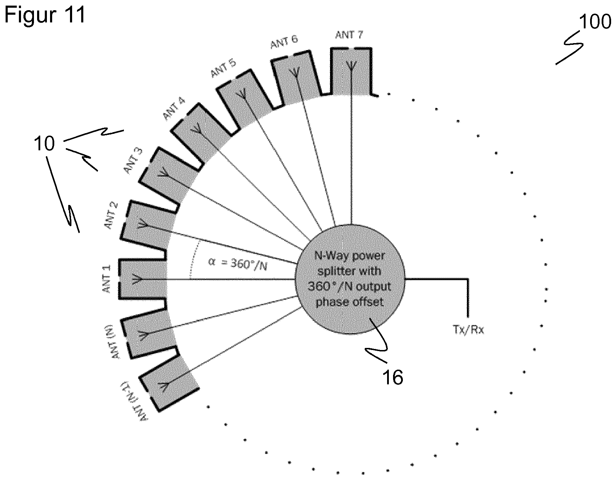

In den bisherigen Ausführungsformen sind genau vier Einzelantennen 10a-d vorgesehen. Das stellt in der Tat in den meisten Anwendungen ein Optimum aus Aufwand, Platzbedarf, Verlusten in der Speiseschaltung 16 und guten Antenneneigenschaften gerade im Hinblick auf zirkulare Polarisation dar. Figur 11 illustriert in einem Blockschaltbild, wie bei Bedarf eine Verallgemeinerung auf n zusätzliche Einzelantennen 10 möglich ist, wobei eine gerade Anzahl bevorzugt ist. Damit lässt sich eine Antenne 100 mit extrem geringem Achsenverhältnis realisieren, die noch robuster auf Änderungen in der direkten Umgebung reagiert. Gemäß Figur 11 werden n Einzelantennen 10 so gegeneinander verkippt, dass sie sich 360° gleichmäßig aufteilen. Eine entsprechende Speiseschaltung 16 versorgt die Einzelantennen 10 mit der dazu passenden Phase.

## Patentansprüche

1. Antenne (100) für eine RFID-Lesevorrichtung mit mehreren Einzelantennen (10) des Typs Inverted-F-Antenne, wobei die Einzelantennen (10) in einer Ebene und innerhalb der Ebene zueinander verkippt angeordnet sind, und mit einer Speiseschaltung (16), die mit den Einzelantennen (10) verbunden ist, um die Einzelantennen (10) zur Erzeugung einer zirkularen Polarisation mit einem der Verkippung entsprechenden gegenseitigen Phasenversatz anzusteuern,wobei die Antenne (100) mindestens vier Einzelantennen (10a-d), die in einer Drehrichtung ausgerichtet sind, und eine gemeinsame Massefläche (20, 28) parallel zu der Ebene aufweist, wobei die Einzelantennen (10a-d) auf einer Leiterplatte (24) in der Ebene angeordnet sind,
**dadurch gekennzeichnet,**
**dass** zumindest in einer Umgebung der Einzelantennen (10a-d) Öffnungen (30) in der Leiterplatte (24) vorgesehen sind und dass die Massefläche (20, 28) von einer Wand eines leitenden Gehäusebauteils (26) gebildet ist, auf dem die Leiterplatte (24) mit Überstand aufsitzt, wobei die Einzelantennen (10a-d) zumindest teilweise auf dem Überstand angeordnet sind.

2. Antenne (100) nach Anspruch 1,
wobei die Einzelantennen (10a-d) F-förmig sind, wobei der senkrechte Hauptstrich (12) eine Monopolantenne bildet, jedoch mit einem zusätzlichen Kurzschluss (18) als oberen Querstrich neben einem Einspeisepunkt an dem unteren Querstrich (14).

3. Antenne (100) nach Anspruch 1 oder 2,
wobei die Einzelantennen (10a-d) PIFA-Antennen (Planar Inverted-F Antenna) sind.

4. Antenne (100) nach einem der vorhergehenden Ansprüche,
wobei die Antenne (100) vier Einzelantennen (10a-d) in quadratischer Anordnung aufweist.

5. Antenne (100) nach Anspruch 4,
wobei sich die Einzelantennen (10a-d) jeweils über eine Ecke der quadratischen Anordnung hinaus erstrecken.

6. Antenne (100) nach einem der vorhergehenden Ansprüche,
wobei die Einzelantennen (10a-d) einen verbreiterten Endbereich (34) aufweisen.

7. Antenne (100) nach einem der vorhergehenden Ansprüche,
wobei mindestens eine Einzelantenne (10a-d) eine Anpassung insbesondere in einem verbreiterten Endbereich (34) aufweist.

8. Antenne (100) nach einem der vorhergehenden Ansprüche,
wobei die Speiseschaltung (16) dafür ausgebildet ist, vier Einzelantennen (10a-d) mit einem Phasenversatz von +90° in Richtung zu einem Fußpunkt eines senkrechten Hauptstrichs (12) der F-förmigen Einzelantennen (10a-d) anzusteuern.

9. Antenne (100) nach einem der vorhergehenden Ansprüche,
wobei die Speiseschaltung (16) in der Ebene zwischen den Einzelantennen (10a-d) angeordnet ist.

10. Antenne (10) nach einem der vorhergehenden Ansprüche,
wobei das Gehäusebauteil (26) Abschrägungen (32) aufweist und sich so mit zunehmendem Abstand von der Leiterplatte (24) in den Bereich unterhalb des Überstands hinein erstreckt.

11. RFID-Lesevorrichtung mit einer Antenne (100) nach einem der vorhergehenden Ansprüche.

12. Verfahren zum Senden und/oder Empfangen von RFID-Signalen mit einer Antenne (100) nach einem der vorhergehenden Ansprüche.

## Claims

1. An antenna (100) for an RFID reading apparatus, the antenna (100) having a plurality of single antennas (10) of the inverted-F type, wherein the single antennas (10) are arranged in a plane and are tilted with respect to one another within the plane, and having a feed circuit (16) that is connected to the single antennas (10) for controlling the single antennas (10) with a mutual phase offset corresponding to the tilt in order to generate a circular polarization, wherein the antenna (100) comprises at least four single antennas (10a-d), which are aligned in a direction of rotation, and a common ground plane (20, 28) in parallel with the plane, wherein the individual antennas (10a-d) are arranged on a circuit board (24) in the plane,
**characterized in that** openings (30) are provided in the circuit board (24) at least in an environment of the single antennas (10a-d) and **in that** the ground plane (20, 28) is formed by a wall of a conductive housing component (26) on which the circuit board (24) is seated with an overhang, with the single antennas (10a-d) being at least partly arranged on the overhang.

2. The antenna (100) in accordance with claim 1,
wherein the single antennas (10a-d) are of F shape, with the perpendicular line (12) forming a monopole antenna, but with an additional short-circuit (18) as the upper bar beside a feed point at the lower bar (14).

3. The antenna (100) in accordance with claim 1 or 2,
wherein the single antennas (10a-d) are PIFA antennas.

4. The antenna (100) in accordance with any of the preceding claims,
wherein the antenna (100) has four single antennas (10a-d) in a quadratic arrangement.

5. The antenna (100) in accordance with claim 4,
wherein the single antennas (10a-d) each extend over a corner of the quadratic arrangement.

6. The antenna (100) in accordance with any of the preceding claims,,
wherein the single antennas (10a-d) have a widened end region (34).

7. The antenna (100) in accordance with any of the preceding claims,
wherein at least one single antenna (10a-d) has an adaptation, in particular in a widened end region (34).

8. The antenna (100) in accordance with any of the preceding claims,
wherein the feed circuit (16) is configured to control four single antennas (10a-d) having a phase offset of +90° in the direction toward a base of a perpendicular line (12) of the F-shaped single antennas (10a-d).

9. The antenna (100) in accordance with any of the preceding claims,
wherein the feed circuit (16) is arranged in the plane between the single antennas (10a-d).

10. The antenna (100) in accordance with any of the preceding claims,
wherein the housing component (26) has chamfers (32) and thus extends into the region beneath the overhang as the spacing from the circuit board (24) increases.

11. An RFID reading apparatus having an antenna (100) according to any of the preceding claims.

12. A method for transmitting and/or receiving RFID signals by an antenna (100) according to any of the preceding claims.

## Revendications

1. Antenne (100) pour un dispositif de lecture RFID, comportant plusieurs antennes individuelles (10) du type antenne F inversée, les antennes individuelles (10) étant agencées dans un plan et de façon basculée les unes par rapport aux autres à l'intérieur du plan, et comportant un circuit d'alimentation (16) connecté aux antennes individuelles (10) pour piloter les antennes individuelles (10) en vue de générer une polarisation circulaire avec un déphasage mutuel correspondant au basculement, l'antenne (100) comprenant au moins quatre antennes individuelles (10a - d) qui sont orientées dans une direction de rotation, et une surface de masse commune (20, 28) parallèle au plan, les antennes individuelles (10a - d) étant agencées sur une carte à circuits imprimés (24) dans le plan,
**caractérisée en ce que**
au moins dans un environnement des antennes individuelles (10a - d), des ouvertures (30) sont prévues dans la carte à circuits imprimés (24), et **en ce que** la surface de masse (20, 28) est formée par une paroi d'un composant de boîtier (26) conducteur sur lequel repose la carte à circuits imprimés (24) avec porte-à-faux, les antennes individuelles (10a - d) étant agencées au moins partiellement sur le porte-à-faux.

2. Antenne (100) selon la revendication 1,
dans laquelle les antennes individuelles (10a - d) sont en forme de F, la branche principale verticale (12) formant une antenne unipolaire, cependant avec un court-circuit supplémentaire (18) en tant que branche transversale supérieure à côté d'un point d'alimentation sur la branche transversale inférieure (14).

3. Antenne (100) selon la revendication 1 ou 2,
dans laquelle les antennes individuelles (10a - d) sont des antennes PIFA (Planar Inverted-F Antenna).

4. Antenne (100) selon l'une des revendications précédentes,
dans laquelle l'antenne (100) comprend quatre antennes individuelles (10a - d) en disposition carrée.

5. Antenne (100) selon la revendication 4,
dans laquelle les antennes individuelles (10a - d) s'étendent chacune au-delà d'un coin de la disposition carrée.

6. Antenne (100) selon l'une des revendications précédentes,
dans laquelle les antennes individuelles (10a - d) présentent une zone d'extrémité élargie (34).

7. Antenne (100) selon l'une des revendications précédentes,
dans laquelle au moins une antenne individuelle (10a - d) présente une adaptation en particulier dans une zone d'extrémité élargie (34).

8. Antenne (100) selon l'une des revendications précédentes,
dans laquelle le circuit d'alimentation (16) est réalisé pour piloter quatre antennes individuelles (10a - d) avec un déphasage de +90° en direction vers un point de pied d'une branche principale verticale (12) des antennes individuelles (10a - d) en forme de F.

9. Antenne (100) selon l'une des revendications précédentes,
dans laquelle le circuit d'alimentation (16) est agencé dans le plan entre les antennes individuelles (10a - d).

10. Antenne (100) selon l'une des revendications précédentes,
dans laquelle le composant de boîtier (26) présente des chanfreins (32) et s'étend ainsi jusque dans la zone au-dessous du porte-à-faux, avec espacement croissant depuis la carte à circuits imprimés (24).

11. Dispositif de lecture RFID comportant une antenne (100) selon l'une des revendications précédentes.

12. Procédé pour émettre et/ou recevoir des signaux RFID avec une antenne (100) selon l'une des revendications précédentes.
